**Europäisches Patentamt**

**European Patent Office**

**Office européen des brevets**

(19)

(11) Numéro de publication: **0 116 788**
A1

## (12) DEMANDE DE BREVET EUROPEEN

(21) Numéro de dépôt: 83307974.2

(22) Date de dépôt: 23.12.83

(51) Int. Cl.³: **F 24 D 13/02**

(30) Priorité: 27.12.82 FR 8221832

(43) Date de publication de la demande:
29.08.84 · Bulletin 84/35

(84) Etats contractants désignés:
AT BE CH DE FR GB IT LI LU NL SE

(71) Demandeur: D.B.M. LONDON COMPANY LIMITED
1 Leonard Street City Road
London EC2A 4AQ(GB)

(72) Inventeur: Vasseur, Georges
16, Route du Saussan
F-34570 Pignan(FR)

(74) Mandataire: Valentine, Francis Anthony Brinsley et al,
REDDIE & GROSE 16 Theobalds Road
London WC1X 8PL(GB)

(54) Module chauffant et isolant.

(57) L'invention concerne un module chauffant et isolant, destiné en particulier à la réalisation de plafonds chauffants par rayonnement du type comportant un film chauffant constitué par une enduction conductrice reliée à deux bandes latérales de connexion.

Le problème technique posé est de pouvoir vérifier aisément le branchement électrique avant de fixer le plafond proprement dit.

Le module selon l'invention est constitué d'un matelas isolant thermique (1) d'un film chauffant (2) fixé sur la face de ce matelas qui est dirigée vers le local à chauffer et dont la partie active a des dimensions légèrement inférieures à celles du matelas, et d'éléments (6) de connexion électriques reliés aus deux extrémités des bandes d'alimentation du film chauffant (2) et logés dans la partie inférieure du matelas isolant.

Application en particulier aux plafonds rapportés ou suspendus.

FIG.1

EP 0 116 788 A1

"Module chauffant et isolant".

La présente invention concerne un module chauffant et isolant destiné en particulier à la réalisation de plafonds chauffants par rayonnement, notamment lorsqu'il s'agit de plafonds rapportés ou suspendus.

Le module selon l'invention permet la mise en oeuvre simultanée de deux des principaux éléments destinés à la réalisation de plafonds chauffants, facilite la mise en place des connexions électriques, la vérification rapide du bon fonctionnement du chauffage ainsi réalisé, la bonne juxtaposition des différents modules entre eux, une meilleure qualité de la barrière thermique, un abaissement des coûts d'emballage, de transport et distribution, de pose et de finition.

Le module selon l'invention est du type comportant un film chauffant constitué par une enduction conductrice reliée à deux bandes latérales de connexion et d'alimentation électrique. Il est notamment remarquable en ce qu'il est constitué d'un matelas isolant continu, d'un film chauffant fixé sur la face de ce matelas qui est dirigée vers le local à chauffer et dont la partie active a des dimensions légèrement inférieures à celles du matelas et d'éléments de connexion électriques qui sont reliés aux deux extrémités des bandes de connexion du film chauffant et logés dans la partie inférieure du matelas isolant.

Les connexions électriques précitées permettent le raccordement électrique des modules sur deux côtés opposés, soit entre eux pour réaliser des lignes de modules électriquement alimentés en parallèle, soit à des câbles d'alimentation.

Le matelas isolant s'oppose aux déperditions vers le haut, par convection et/ou rayonnement de la chaleur produite par l'élément chauffant.

Le module selon l'invention permet d'adapter le principe du chauffage par plafond rayonnant à divers types de plafonds rapportés, ou suspendus, qu'ils soient en plaques, ou sous forme de toiles ou films tendus, ou encore de revêtements collés sans que cette liste soit limitative.

Un pare-vapeur (papier Kraft) peut être intercalé entre les éléments du complexe. L'élément isolant thermique peut également comporter un réflecteur ( film métallisé, feuille d'aluminium par exemple).

0116788

Les éléments du module sont solidarisés entre eux par collage, ou par des bandes adhésives ou tous autres procédés connus.

Un des aspects importants de l'invention consiste en ce que le module comporte sur au moins deux des côtés de l'élément isolant thermique, une feuillure permettant d'une part de le poser sur l'ossature du plafond, et d'autre part de réaliser la continuité de l'isolation thermique au-dessus desdits plafond et ossature.

Cette feuillure peut être simple pour les cas généraux de mise en oeuvre, comme par exemple dans le cas de plafonds en plaques de plâtre cartonné vissées sous ossature métallique. Elle peut également consister en un détourage, sur deux ou quatre des côtés du module pour s'adapter aux systèmes de bâtiments préfabriqués.

Un autre des aspects importants de l'invention consiste en ce que l'élément d'isolation thermique du module présente, au niveau des extrémités des bandes de connexion du film chauffant, des découpes ou évidements permettant, après raccordement électrique des modules entre eux ou aux câbles d'alimentation d'y insérer lesdits éléments de câbles ainsi que les accessoires de raccordement, de façon à ce que le contact entre la face inférieure du module et le plafond proprement dit soit parfaitement réalisé.

Un troisième aspect important de l'invention consiste en ce que la feuillure décrite précédemment peut être dimensionnée de telle sorte que, lors de la mise en place des plaques de plafond, celles-ci viennent repousser les modules de complexe chauffant et isolant vers le haut.

Dans un exemple non limitatif de mise en oeuvre des modules objets de l'invention avec un plafond en plaques de plâtre vissées sous ossature métallique, on peut ainsi, après mise en place de l'ossature à la trame prévue, disposer l'ensemble des modules chauffants et isolants, posé en attente sur l'ossature aux emplacements prévus, réaliser ensuite le raccordement électrique des modules entre eux et aux câbles d'alimentation, au moyen par exemple de connecteurs, vérifier le fonctionnement en chauffe de l'ensemble, introduire les éléments de câbles de raccordement dans les découpes de l'isolant thermique et, finalement, visser les plaques de plafond selon les techniques habituelles.

Les zones non chauffantes du plafond peuvent être thermiquement isolées en employant des éléments d'isolation thermique présentant les mêmes feuillures que les modules chauffants et isolants, et pouvant être découpés à la demande.

L'intérêt de l'invention est multiple.

Elle permet en effet :

- la préfabrication de modules destinés au chauffage par plafonds rayonnants où l'élément chauffant en film mince est maintenu en sous-face de l'élément isolant thermique, d'où une manipulation beaucoup plus simple, résolvant en particulier les problèmes de maintien du film chauffant avant la pose de plafond.

- la pose de ces modules sur l'ossature du plafond, qui, compte tenu de leur faible poids, facilite leur positionnement et leur calage de façon à réaliser une isolation thermique sans discontinuité et un bon positionnement du film chauffant par rapport au plafond.

- la vérification rapide de la qualité des connexions électriques par la mise en chauffe de l'ensemble installé, avant pose du plafond, donc sans l'inconvénient de l'inertie thermique de ce dernier et une réalisation facile des corrections ou réparations éventuellement nécessaires.

- la réduction du nombre des joints de finition du plafond par rapport à des modules chauffants et isolants comportant leur propre élément de plafond, dans le cas particulier des plafonds en plaques de plâtre posés sous une ossature cachée par exemple.

- 4 -                          0116788

D'autres caractéristiques et avantages
de l'invention    ressortiront de la description qui suit, faite
à titre illustratif en se référant aux dessins ci-annexés sur
lesquels :

- la fig.1 est une vue en coupe transversale d'un mode de réalisation de l'invention,

- la fig.2 est une vue en coupe longitudinale de modules selon la fig.1, et

- la fig.3 est une vue en coupe transversale d'un deuxième mode de réalisation de l'invention.

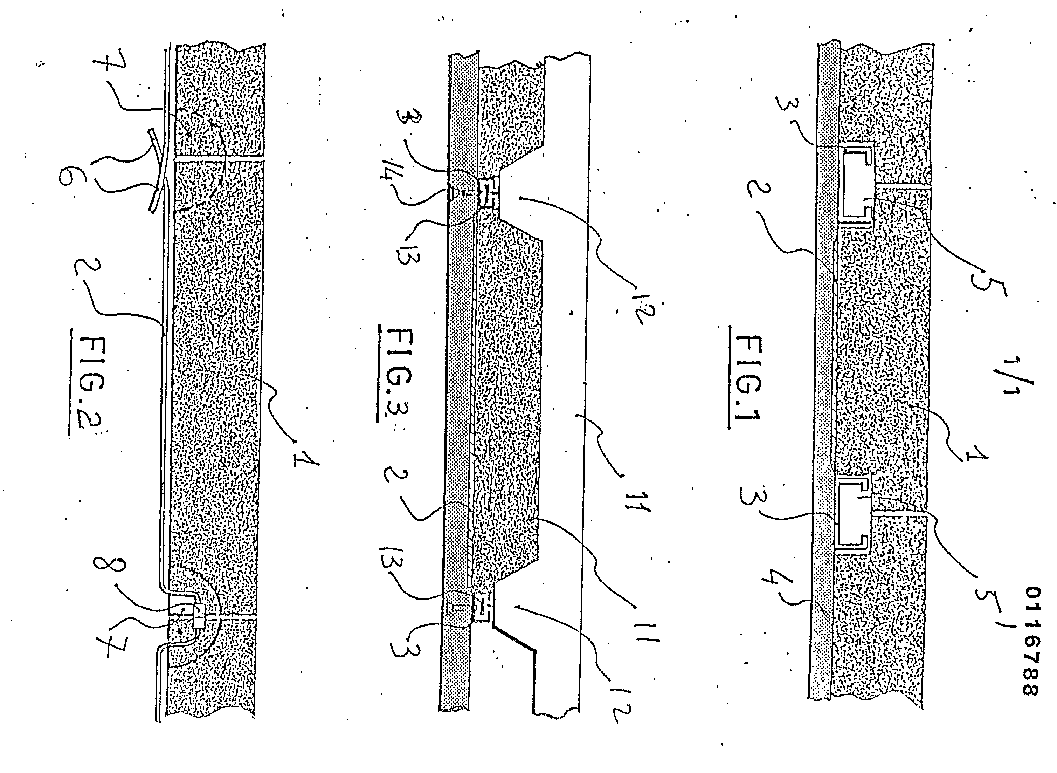

On voit sur la fig.1, un module selon
l'invention disposé entre deux modules adjacents ; il  comporte
un matelas isolant 1 et un élément chauffant 2. Le matelas isolant est réalisé en toute matière isolante appropriée telle que
par exemple de la laine de verre ; l'élément chauffant est essentiellement constitué par un film chauffant constitué par une
enduction conductrice munie de deux bandes de connexions électriques latérales. Cet élément chauffant est fixé sur le matelas
1 par exemple par collage, de préférence au  moyen  de bandes adhésives. On peut éventuellement insérer un élément pare vapeur, constitué par exemple par du papier kraft entre le film  chauffant précité et le matelas isolant 1. De même,on peut également prévoir
un réflecteur constitué par exemple par un film métallisé,ou une
feuille d'aluminium.

Selon l'invention, chaque module comporte
des feuillures latérales 5 et 6, sur au moins deux côtés opposés :
ces feuillures sont destinées au logement d'éléments de fixation,
tels que des profilés 3, qui servent à fixer le plafond proprement dit 4 qui peut   être du type plafond rapporté ou suspendu.
Les feuillures 5 et 5' sont dimensionnées de telle manière que,
après fixation du plafond ou parement 4 sur les dispositifs de
fixation 3, les modules soient en contact étroit avec le plafond
par leur élément chauffant 2.

Selon un mode préféré de réalisation ,
les profilés 3 servant à la fixation des plafonds sont disposés à entre-axes de 60 cm, l'élément isolant a une épaisseur de 75 mm
l'élément chauffant une épaisseur de 0,2 mm, et la plaque de plafond 4 une épaisseur de 13 mm.

Sur la fig.2 qui est une coupe prise perpendiculairement à la coupe représentée fig.1, on voit que des évidements 7 sont aménagés au niveau des extrémités des bandes conductrices des films chauffants, des deux côtés du module. Ces évidements servent au logement des éléments de connexion 6 qui sony disposés dans la partie inférieure du matelas isolant 1. On voit sur
la partie gauche de la fig.2, ces éléments 6 avant leur raccordement ; ils sont constitués par des câbles isolés raccordés à l'extrémité des bandes conductrices de connexion du film chauffant ;
le raccordement de deux modules voisins s'effectue au moyen de deux
connecteurs autodénudants 8, l'ensemble de ce dispositif de connexion étant ensuite logé dans un évidement 7 réalisé dans la partie inférieure du matelas 1. Cet évidement 7 peut par exemple être
réalisé au moyen d'un simple trait de scie.

L'invention permet de réaliser de manière
simple et rapide des plafonds chauffants. En effet, il suffit, lors
de la construction, de placer tout d'abord les modules sur les éléments de fixation ; on réalise ensuite les connexions entre modules par lignes et avec les câbles d'alimentation et on peut alors
effectuer la vérification du fonctionnement du plafond de manière
très facile puisque les éléments chauffants sont directement accessibles. On peut ainsi vérifier à la fois le raccordement et le
fonctionnement réel de chaque élément chauffant. Lorsque cette
opération de vérification est terminée, on procède ensuite au montage du plafond suspendu de manière connue, par exemple en vissant
les éléments de plafond 4 sur les éléments de fixation 3. Le plafond 4 vient se plaquer sur la face inférieure des modules et on
réalise ainsi, d'une part, un contact intime entre l'élément chauffant 2 et le plafond 4, ce qui favorise la transmission de la chaleur et/ou rayonnement au plafond 4 qui l'évacue vers la pièce à
chauffer essentiellement par rayonnement, d'autre part, un contact
intime entre le plafond 4 et l'élément isolant thermique en périphé-

0116788

rie de l'élément chauffant 2, ce qui permet d'éviter les pertes de chaleur par convection dans la structure du bâtiment. Par ailleurs, le fait de pouvoir utiliser des plaques de plafond de grandes dimensions comme par exemple dans le cas de plafonds en plaques de plâtre cartonné, permet de réduire le nombre de joints.

Dans le cas où l'ossature porteuse est constituée de profilés métalliques, les suspentes sont généralement réalisées en tôle. Dans ce cas, leur passage, au droit des bords latéraux de l'élément isolant thermique 1 de chaque module chauffant et isolant ou de modules isolants complémentaires, est réalisé sur chantier par simple découpe, à l'emplacement désiré, en bordure de l'isolant thermique, d'une entaille correspondant sensiblement à une demi-largeur de chaque suspente.

De cette façon les éléments d'isolation thermique se jouxtent les uns avec les autres sans discontinuité du barrage thermique à l'emplacement des suspentes.

Les découpes 7 ainsi que les feuillures 5 et 5' ou les détourages peuvent être réalisées par sciage lorsque l'élément d'isolation thermique 1 est constitué d'un parallélépipède de laine minérale ou d'isolant cellulaire à base de matières plastiques ou minérales expansées.

Lorsque l'élément d'isolation thermique résulte d'un moulage, les feuillures 5 et 5', ou les détourages peuvent résulter directement de la forme des moules, les découpes 7 étant, dans ce cas, ramplacées par des évidements dans l'épaisseurde l'élément d'isolation.

Les câbles d'alimentation 6 de chaque module peuvent comporter leurs propres moyens de raccordement électriques tels que fiches mâles et femelles, connecteurs non différenciés, manchons à sertir sans que cette liste soit limitative. Ils peuvent également, dans un exemple de réalisation non limitatif, être appariés ou raccordés aux câbles d'alimentation générale au moment de la mise en oeuvre au moyen de connecteurs auto-dénudants 8.

On peut remarquer d'après les fig.1 et 2 que la largeur et la longueur de l'élément chauffant 2 sont inférieures à la largeur et à la longueur de la face inférieure de l'élément d'isolation thermique 1 du module, cette disposition permettant de ne transmettre qu'un minimum de chaleur à l'ossature porteuse.

La fig.3 représente une variante de réalisation de l'invention destinée à la réalisation de plafonds chauffants sous un plancher en béton 11 qui comporte des renforts croisés 12. Dans ce cas, on réalise dans chaque élément de matelas isolant 1 un détourage qui permet d'adapter sa forme à celle des logements ou alvéoles existants entre les renforts croisés 12.

On voit sur cette figure les profilés 3 de fixation de parement ou "fourrures" qui sont fixés par clipsage sur des pattes 13 fixées dans les renforts 12 à intervalles réguliers, par exemple à entre-axes de 1,20 m. Les parements ou plafonds 4 sont fixés sur ces profilés 3 au moyen de vis 14.

Dans ce mode de réalisation, il est nécessaire, lors du montage de maintenir les modules en place dans les alvéoles en attendant la fixation des plafonds ou parements 4. Ceci peut être obtenu par exemple au moyen de petites tiges fixées sur les pattes 13 et enfoncées dans le matelas 1 ; ceci peut être également obtenu au moyen d'éléments adhésifs fixés à la fois sur les profilés 3 et les modules. Ce maintien est très facile à réaliser puisque les modules ont un poids faible ; ainsi un module de 60 x 60 cm pèse moins de 2 kg.

REVENDICATIONS

1°) Module chauffant et isolant, destiné en particulier à la réalisation de plafonds chauffants par rayonnement du type comportant un film chauffant constitué par une enduction conductrice reliée à deux bandes latérales de connexion caractérisé en ce qu'il est constitué d'un matelas isolant thermique (1) d'un film chauffant(2)fixé sur la face de ce matelas qui est dirigée bers le local à chauffer et dont la partie active à des dimensions légèrement inférieures à celles du matelas et d'éléments (6) de connexion électriques reliés aux deux extrémités des bandes d'alimentation du film chauffant(2) et logés dans la partie inférieure du matelas isolant.

2°) Module chauffant et isolant selon la revendication 1, caractérisé en ce qu'il comporte sur au moins deux côtés opposés, une feuillure (5,5') destinée à loger les éléments de fixation d'un plafond suspendu ou rapporté.

3°) Module chauffant et isolant selon la revendication 1, caractérisé en ce qu'il comporte sur ses quatre côtés, un détourage adapté au profil des renforts d'un plancher de type caisson.

4°) Module chauffant et isolant selon la revendication 1, caractérisé en ce qu'il présente au niveau des extrémités des bandes d'alimentation du film chauffant, des découpes ou évidements (7)permettant, après raccordement électrique des modules entre eux ou aux câbles d'alimentation, d'y insérer les éléments de connexion électrique ainsi que les accessoires de raccordement (8).

5°) Module chauffant et isolant selon la revejdication 1, caractérisé en ce qu'il comporte un pare-vapeur intercalé entre le matelas isolant (1) et le film chauffant (2).

6°) Module chauffant et isolant selon la revendication 1, caractérisé en ce qu'il comporte un réflecteur.

7°) Module chauffant et isolant selon l'une quelconque des revendications 1 à 6, caractérisé en ce que les éléments du module sont solidarisés entre eux par collage.

0116788

8°) Module chauffant et isolant selon la revendication 2, caractérisé en ce que les feuillures sont aménagées dans la partie inférieure du matelas chauffant.

8°) Module chauffant et isolant selon la revendication 2, caractérisé en ce que les feuillures sont aménagées dans la partie inférieure du matelas chauffant.

0116788

FIG.1

FIG.3

FIG.2

**Office européen
des brevets**

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| A | DE-A-1 943 007 (HENDRIX)<br>* En entier * | 1,7 | F 24 D 13/02 |
| A | US-A-3 417 229 (SHOMPHE)<br>* Revendications 1,2 * | 1,6,7 | |
| A | DE-A-2 520 765 (KLAPPEX JALOUSIEN-MARKISEN-FABRIKATION REINER DETENHOFF)<br>* Revendications 1,3,4 * | 1,2,4 | |
| A | FR-A-2 010 241 (THERMO-BAUELEMENT)<br>* Figure 29 * | 1,4 | |

DOMAINES TECHNIQUES
RECHERCHES (Int. Cl. 3)

F 24 D

Le present rapport de recherche a eté etabli pour toutes les revendications

| Lieu de la recherche | Date d'achèvement de la recherche | Examinateur |
|---|---|---|
| LA HAYE | 02-04-1984 | VAN GESTEL H.M. |

CATEGORIE DES DOCUMENTS CITES

X : particulièrement pertinent à lui seul
Y : particulièrement pertinent en combinaison avec un autre document de la même categorie
A : arrière-plan technologique
O : divulgation non-ecrite
P : document intercalaire

T : théorie ou principe à la base de l'invention
E : document de brevet antérieur, mais publié à la date de dépôt ou après cette date
D : cite dans la demande
L : cité pour d'autres raisons

& : membre de la même famille, document correspondant